# EUROPÄISCHE PATENTSCHRIFT

(11) **EP 0 750 545 B1**
(45) Veröffentlichungstag und Bekanntmachung des Hinweises auf die Patenterteilung: **29.07.1998**
(21) Anmeldenummer: 95928382.1
(22) Anmeldetag: 17.03.1995
(51) Int. Cl.: B29C 39/24, B29C 39/38

(54) **VERFAHREN UND VORRICHTUNG ZUM BEFÜLLEN VON GIESSFORMEN MIT GIESSHARZ**
METHOD AND DEVICE FOR FILLING CASTING MOULDS WITH CASTING RESIN
PROCEDE ET DISPOSITIF POUR REMPLIR DES MOULES A FONDRE AVEC DE LA RESINE DE COULEE

(30) Priorität: 17.03.1994 DE 4409214
(43) Veröffentlichungstag der Anmeldung: 02.01.1997
(73) Patentinhaber: WILHELM HEDRICH VAKUUMANLAGEN GmbH & Co. KG, D-35630 Ehringshausen-Katzenfurt (DE)
(72) Erfinder: HÄUSER, Erhard, D-35641 Schöffengrund (DE); HEDRICH, Wilhelm, D-35630 Ehringshausen (DE)
(74) Vertreter: Müller, Eckhard, Dr.
(86) Internationale Anmeldenummer: EP9501014
(87) Internationale Veröffentlichungsnummer: WO9525001

(56) Entgegenhaltungen:
- DE-A- 2 758 801
- FR-A- 2 407 805
- GB-A- 1 165 558
- US-A- 3 000 759

## Beschreibung

Die Erfindung bezieht sich auf ein Verfahren zum Befüllen wenigstens einer Gießform mit einer gießfähig flüssigen Masse, insbesondere Gießharz, sowie eine Vorrichtung zur Durchführung des Verfahrens.

Eine derartige Gießvorrichtung, insbesondere eine Druckgeliervorrichtung ist bspw. aus der DE-PS 34 20 222 bekannt. Hierbei wird die Gießmasse in sogenannte Schließformen eingefüllt und unter erhöhter Temperatur zur Gelierung gebracht. Die Zeitdauer bis zur Ausformbarkeit der Gießlinge ist u. a. abhängig von dem in den Leitungen und Bauteilen der Gießvorrichtung anstehenden Massevolumen oder der Anhäufung des Massevolumens und ist bei großvolumigen Gießformen wesentlich länger als bei dünnwandigen Gießlingen. Die sich daraus ergebende Taktzeit für die Herstellung eines Gießlings bestimmt wesentlich seine Herstellungskosten. Zwar führt eine Aufheizung der Gießmasse zu einer höheren Reaktivität und damit einer geringeren Topfzeit. Eine höhere Temperatur der Gießmasse hat jedoch notwendigerweise zur Folge, daß der Durchsatz durch die Leitungen und die Bauteile der Gießvorrichtung hoch sein muß, um reaktives Material ständig austauschen und Anbackungen an den Leitungen der Bauteile verhindern zu können. Dies bedeutet, daß die Gießharztemperatur und damit auch die Arbeitsgeschwindigkeit der bekannten Gießvorrichtung durch die Fertigungsbedingungen während der Produktionspausen festgelegt ist.

Aus der DE-A-27 58 801 ist ein Verfahren zur Herstellung von Isolierstoffteilen aus gießfähigem Epoxidharz bekannt, wobei mindestens zwei Gießharzkomponenten miteinander vermischt werden und danach das Gießharzgemisch ggf. unter Anwendung von Druck und/oder höherer Temperatur geformt und im geformten Zustand ausgehärtet wird. Zusätzlich ist mindestens eine der Gießharzkomponenten mit Füllstoff versetzt. Um im Hinblick auf eine bessere Auslastung der Gießharzaufbereitsanlage eine Trennung des Gießharzaufbereitungsprozesseses vom Takt der Gießharzteileformung zu erreichen, wird das Gießharzgemisch in einer den Formkörper entsprechenden Menge portioniert und auf eine die Reaktionsfähigkeit des Gemisches herabsetzende Temperatur gebracht, sodann zwischengelagert und vor dem Formen zur Erreichung des reaktionsfähigen Zustandes wieder aufgewärmt. Nachteilig hierbei ist, daß eine Abkühlung der gesamten Gießharzmasseportionen mit späterer Wiederaufheizung erfolgt, was eine ungünstige Energiebilanz darstellt. Auch setzt das Zwischenlagern entsprechende Behältnisse mit u. U. unterschiedlichen Größen sowie ausreichende Lagermöglichkeiten voraus, was ebenfalls die Kosten des Verfahrens erhöht. Ein wesentlicher Nachteil ist auch, daß das Gießharz während des Kühl- und Aufwärmprozesses bei der Zwischenlagerung nur unzulänglich von Atmosphärendruck abgeschirmt werden kann.

Davon ausgehend liegt der Erfindung die Aufgabe zugrunde, ein Verfahren und eine Vorrichtung zum Befüllen wenigstens einer Gießform mit einer gießfähig flüssigen Masse anzugeben, welche die Taktzeit zur Füllung der wenigstens einen Gießform und damit die Formbelegungszeit wesentlich verkürzt.

Verfahrensmäßig wird diese Aufgabe gelöst durch die kennzeichnenden Merkmale des Anspruches 1.

Durch das erfindungsgemäße Verfahren ist eine Steuerung der Reaktivität der Gießmasse vor und während des Füllvorgangs erreicht. Während des Füllvorgangs wird die Reaktivität der Gießmasse durch Energiezufuhr erhöht, so daß die Gießmasse sehr viel schneller in die Form eingebracht werden kann und dabei vorallem schneller in der Form geliert. Am Ende des Füllvorgangs und/oder während der Produktionspausen wird die Reaktivität der Gießmasse durch Energieentzug auf einen solchen Wert abgesenkt, bei welchen keine Anbackungen in den Leitungen und Bauteilen entstehen können. Während der Verarbeitung bzw. während des Füllvorgangs weist daher die Gießmasse eine kurze Topfzeit im Hinblick auf eine kurze Formbelegungszeit auf. Zum Ende des Füllvorganges hin wird die Topfzeit wieder erhöht, so daß es durch die niedrigere Reaktivität der Gießmasse zu keinen Anbackungen in den Leitungen und Bauteilen der Gießvorrichtung kommt. Ein weiterer Vorteil des erfindungsgemäßen Verfahrens ist, daß durch die Steuerung der Reaktivität auch solche Gießmassen verarbeitet werden können, welche beim Verguß eine bestimmte Mindestviskosität aufweisen müssen, wie bspw. Gießmassen zum Imprägnieren von Feindrahtwicklungen wie etwa bei Zeilentransformatoren oder Zündspulen. Auch hat die Annäherung der Temperatur der Gießmasse an diejenige der üblicherweise aufgeheizten Gießform einen günstigen Einfluß auf die Qualität der Gießlinge, da Spannungen im Gießling vermieden werden können. Beim Druckgelieren ergibt sich eine besonders günstige Homogenität beim Durchgelieren der Gießmasse in der Gießform. Ein weiterer Vorteil der Erfindung ergibt sich daraus, daß durch die Temperierung der Gießmasse im Moment der Verarbeitung auf eine Aufheizung von Bauteilen, wie bspw. Vorratsbehältern und dgl., auf ein höheres Niveau verzichtet werden kann. Hierdurch kann sich die Energiebilanz insgesamt verbessern, wobei eine Beeinträchtigung des Materials infolge eines Materialstresses durch Temperaturbeanspruchung, noch reduziert wird.

Vorteilhafte Ausgestaltungen des erfindungsgemäßen Verfahrens ergeben sich aus den Unteransprüchen.

Nach einem Gedanken der Erfindung ist es z. B. möglich, daß die Reaktivität während der Füllphase der wenigstens einen Gießform einem mehrmaligen Wechsel unterworfen wird, um etwa ein bestimmtes Temperaturprofil der Gießmasse zu fahren, was im Falle des Druckgelierens besondere Bedeutung gewinnen kann.

Die Änderung der Reaktivität der Gießmasse wird vorzugsweise üblicherweise durch Wärmezufuhr und Wärmeentzug durchgeführt.

Das erfindungsgemäße Verfahren eignet sich in vorteilhafter Weise auch für den seriellen Verguß an Gießformen, wobei der Energieentzug bzw. die Temperaturabsenkung der Gießmasse dann während der Gießpausen zwischen den Serien mit Gießformen erfolgt. Es wird also nicht nach jedem Einzelteil eine Energieabsenkung der Gießmasse vorgenommen, sondern erst nachdem bspw. die auf einer Palette angeordneten Gießformen als Serie vergossen sind und die nächste Palette mit Gießformen in den Gießraum eingebracht wird. Hierdurch ist die Energiebilanz wesentlich verbessert. Eine solche Vorgehensweise empfiehlt sich immer dann, wenn nur relativ kurze Gießpausen zwischen den einzelnen Gießvorgängen vorhanden sind, d.h. eine sukzessive Füllung der Gießformen erfolgt.

Alternativ oder zusätzlich zur Variation der Reaktivität durch Energiezufuhr und Energieentzug der Gießmasse ist es auch möglich, bei Gießmassen, welche aus wenigstens zwei Einzelkomponenten gebildet werden, die Einzelkomponenten während der Füllphase zum Befüllen der wenigstens einen Gießform aufzuheizen und zu mischen. Hierdurch ergibt sich eine wesentlich niedrigere Viskosität der Einzelkomponenten, mit dem Vorteil, daß Mischer mit kleineren Abmessungen eingesetzt werden können. Als Folge der geringeren Viskosität der Einzelkomponenten stellt sich nämlich ein kleinerer Druckverlust innerhalb des Mischers ein. Ein sich wiederum aus einem kleineren Mischer ergebender Vorteil ist, daß das Massevolumen entsprechend klein ist, was zu einem schnellen Temperaturwechsel im Hinblick auf die erfindungsgemäße Technik führt. Ein kleinere Mischer hat auch den Vorteil, daß bei Beendigung des Füllvorgangs die in der Gießmasse vorhandene Restwärme schnell an die Umgebung abgegeben werden kann, so daß es in vielen Fällen keiner separaten Temperaturabsenkung bedarf.

Selbstverständlich ist es nach der Erfindung aber auch möglich, daß die Komponenten während oder nach der Füllphase wenigstens einem Temperaturwechsel unterworfen werden, wobei eine gezielte Temperaturabsenkung der Einzelkomponenten vorgenommen wird. Das Absenken der Temperatur der Einzelkomponenten erfolgt zum Ende des Füllvorganges hin, so daß die nachströmenden kühleren Einzelkomponenten die heiße Gießmasse in die Formen verdrängen und am Ende des Füllvorgangs die masseführenden Leitungen bis zur Gießmündung auf einem tieferen, hinsichtlich der Reaktivität unkritischen Temperaturniveau liegen.

Zusätzlich oder alternativ zur Wechseltemperierung der Einzelkomponenten ist es auch denkbar, daß lediglich eine Aufheizung der Einzelkomponenten erfolgt, während im Bereich zwischen Mischeinrichtung und Gießmündung einer Gießvorrichtung zum Ende der Füllphase hin die Gießmasse einer Abkühlung unterworfen wird. Hierdurch kann u.U. eine Verbesserung der Energiebilanz erreicht werden.

Vorrichtungsmäßig wird die Aufgabe i. w. durch die kennzeichnenden Merkmale des Anspruches 11 gelöst. Hierdurch läßt sich in konstruktiv einfacher Weise sowohl eine Aufheizung als auch eine Temperaturabsenkung der Gießmasse bzw. der Einzelkomponenten zur Erzielung einer geringen Formbelegungszeit durchführen. Vorteilhafte Ausgestaltungen der erfindungsgemäßen Vorrichtung finden sich in den nachgeordneten Unteransprüchen.

In einer Ausführungsform der Erfindung ist dabei es vorgesehen, daß die Wärmeübertragung direkt oder indirekt durch eine Wärmetauscherfläche erfolgt. Eine direkte Aufheizung kann bspw. elektrisch mittels einer elektrischen Heizung durchgeführt werden. Ebenso kann zur Aufheizung der Masse auch Strahlungswärme benutzt werden, indem bspw. Quarzlampen auf einen Leitungsabschnitt oder einen Bauteil der Gießvorrichtung gerichtet werden, wobei über die als Wärmetauscherfläche wirkende Wandung des Leitungsabschnittes bzw. des Bauteiles eine Übertragung der Wärme auf die Masse erfolgt. Eine indirekte Wärmeübertragung kann bspw. mittels einem flüssigen, dampf- und/oder gasförmigen Wärmeträgermedium erfolgen. Die Auswahl, welches Wärmeträgermedium zum Einsatz kommt, ist im Bedarfsfalle zu entscheiden.

Der Wärmetauscher kann erfindungsgemäß bspw. am Ausgang der Mischeinrichtung und/oder mit der Mischeinrichtung integriert sein.

Im Falle der Wechseltemperierung der Einzelkomponenten der Gießmasse kann jeweils eine Wärmetauscher auch zwischen den Fördereinrichtungen für die Einzelkomponenten und der Mischeinrichtung angeordnet sein. Solchenfalls stehen dem konstruktiven Mehraufwand gegenüber einer Anordnung eines Wärmetauschers nach der Mischeinrichtung eine entsprechende Vergrößerung der Wärmetauscherflächen bei gleichzeitiger Reduzierung des Fließwiderstandes vor dem Mischer gegenüber. Dies hat auch eine entsprechende Reduzierung des Druckverlustes im Mischer zur Folge, da dünnflüssigere erwärmte Komponenten den Mischer leichter passieren. Diese Maßnahme wird man bevorzugt bei großvolumigen Formen anwenden, bei denen im Hinblick auf die Verkürzung der Formbelegungszeit höhere Flußraten erforderlich sind.

Als Wärmetauscher kommen grundsätzlich alle Ausführungsformen in Betracht. Von Vorteil kann ein Rohrschlangen-Wärmetauscher sein, wobei die Gießmasse oder die Einzelkomponenten durch Rohrschlangen geführt werden und das Wärmeträgermedium von außen um die Rohrschlangen strömt. Bei dieser Ausführungsform ist sichergestellt, daß der Gießmasse bzw. den Einzelkomponenten nur ein Durchflußquerschnitt zu Verfügung steht bzw. stehen und es daher nicht zu Verstopfungen von Parallelwegen wie bei anderen Wärmetauschertypen kommen kann. Zusätzlich wird durch die wendelförmige Führung der Einzelkomponenten bzw. der Gießmasse eine Homogenisierung der Temperatur erreicht, was die Produktqualität wesentlich verbessert.

Selbstverständlich ist es auch möglich, die Masseleitungen, Armaturen, Ventile und sonstigen Bauteile der Vorrichtung einer Wechseltemperierung zu unterwerfen.

Weitere Ziele, Vorteile, Merkmale und Anwendungsmöglichkeiten der vorliegenden Erfindung ergeben sich aus der nachfolgenden Beschreibung der Ausführungsbeispiele anhand der Zeichnungen. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Es zeigen:
- Figur 1: eine mögliche Ausführungsform einer erfindungsgemäßen Vorrichtung zum Vergießen von gießfähig flüssigen Medien in eine Gießform im Druckgelierverfahren,
- Figur 2: eine weitere Ausführungsform einer erfindungsgemäßen Druckgeliervorrichtung und
- Figur 3: eine mögliche Ausführungsform eines Wärmetauschers zur Anordnung in einer Vorrichtung gemäß Figuren 1 und 2.

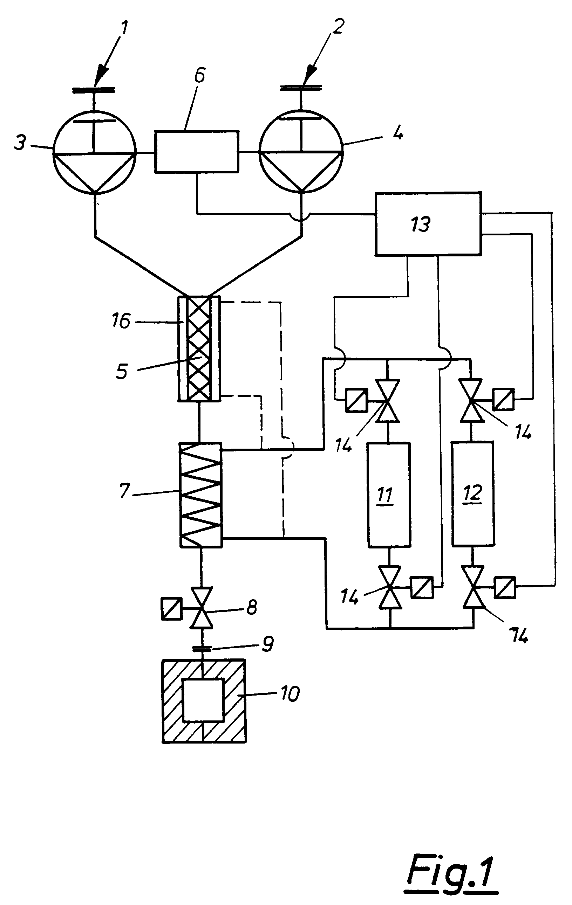

Die Vorrichtung gemäß Figur 1 weist zwei Anschlüsse 1, 2 zu (nicht dargestellten) Vorratsbehältern für die Einzelkomponenten der Gießmasse auf. Die Anschlüsse 1, 2 führen zu Fördereinrichtungen 3 bzw. 4, welche die Einzelkomponenten zu einer, bei dem hier gewählten Ausführungsbeispiel als Durchlaufmischer ausgebildeten, Mischeinrichtung 5 fördern. Die Fördereinrichtungen 3, 4 können in der einfachsten Ausführungsform als Dosierpumpen ausgebildet sein, wie sie bspw. in der deutschen Patentanmeldung P 43 44 922.0 beschrieben sind. Derartige Dosierpumpen können auf einen wesentlich höheren Arbeitsdruck für die Zuführung der Einzelkomponenten ausgelegt sein. Die Fördereinrichtungen 3, 4 werden mittels einer Synchroneinrichtung 6 betrieben.

Die aus der Mischeinrichtung 5 austretende Gießmasse gelangt bei der Ausführungsform gemäß Figur 1 über einen Wärmetauscher 7, ein Gießventil 8 und die Gießmündung 9 in eine Gießform 10, welche bei dem hier gewählten Ausführungsbeispiel einer Druckgeliervorrichtung zum Herausnehmen des Formteils öffnen- und schließbar ist.

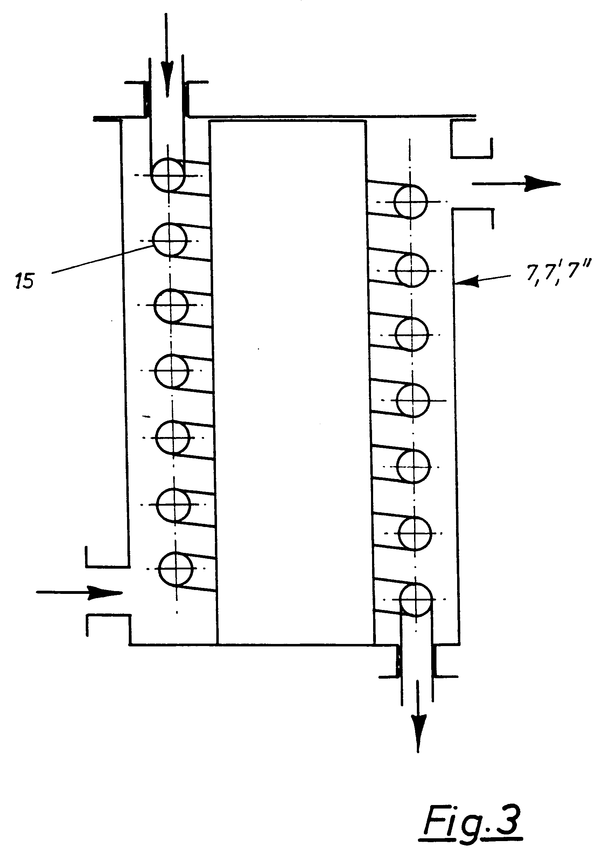

Der Wärmetauscher 7 dient für eine Aufheizung der aus der Mischeinrichtung 5 austretenden Gießmasse und ist bspw. als Rohrschlangen-Wärmetauscher, wie er in Figur 3 dargestellt ist, ausgebildet. Der Wärmetauscher 7 ist wahlweise an eine Temperiereinrichtung 11 bzw. 12 anschließbar. Wie weiterhin aus Figur 1 zu entnehmen, ist auch die Mischeinrichtung 5 an die Temperiereinrichtung 11, 12 anschließbar, kann aber auch an eine separate (nicht dargestellte) Temperiereinrichtung angeschlossen werden.

Die Temperiereinrichtungen 11, 12 weisen unterschiedliche Temperaturniveaus für das zum Wärmetauscher 7 bzw. zur Mischeinrichtung 5 geführte Wärmeträgermedium auf. Das Ankoppeln bzw. Abkoppeln der Temperiereinrichtungen 11, 12 in einer vorgegebenen zeitlichen Abfolge mit einem entsprechenden Öffnen und Schließen der Ventile 14 erfolgt mittels einer Steuereinrichtung 13. Die Anordnung des Wärmetauschers 7 und ggf. des Heizmantels und die Mischeinrichtung 5 dient dazu, die Gießmasse während des Füllvorganges auf ein höheres Temperaturniveau zu bringen, um durch Erhöhung der Reaktivität der Gießmasse eine Verkürzung der Formbelegungszeit bzw. der Taktzeit der Vorrichtung zu erreichen.

Um aber ein Anbacken der durch die Aufheizung aktivierten Gießmasse in den Masseleitungen bzw. den einzelnen Bauteilen zu verhindern und einer Verstopfungsgefahr entgegenzuwirken, wird eine Wechseltemperierung des Wärmetauschers 7 und ggf. der Mischeinrichtung 5 derart vorgenommen, daß in Abhängigkeit des Füllvorganges durch die Fördereinrichtungen 3, 4 und der Synchroneinrichtung 6 ein Umschalten des Wärmeträgermediums von der Temperiereinrichtung mit der höheren Temperatur, bspw. die mit Bezugszeichen 11 angezogene Temperiereinrichtung, auf die Temperiereinrichtung 12 mit niedriger Temperatur im Verlaufe des Füllvorganges erfolgt. Hierdurch wird am Ende des Füllvorganges infolge der Temperaturabsenkung die zuvor erhöhte Reaktivität der Gießmasse wieder zurückgefahren, so daß es während des Druckgeliervorganges nicht zu Anbackungen in der Masseleitung und Mischvorrichtung kommen kann.

Insoweit kann es u. U. möglich sein, die Temperiereinrichtung mit dem niedrigerem Temperaturniveau entfallen zu lassen, sofern die im Massesystem befindliche höher temperierte Gießmasse durch die nachströmende niedriger temperierte Gießmasse in die Gießform verdrängt wird und dann bis zur Gießmündung Gießmasse mit niedrigerer Temperatur ansteht.

Um eine günstige und vor allem homogene Wärmeübertragung auf die Gießmasse zu erreichen, müssen die Querschnitte des Wärmetauschers entsprechend klein sein. Dies führt dementsprechend zu einem höheren Fließwiderstand des Gesamtsystems. Um diese höheren Fließwiderstände zu beherrschen, eignet sich insbesondere die Ausbildung der Fördereinrichtungen 3, 4 als Kolben-Zylinder-Anordnungen, wie sie in der Patentanmeldung P 43 44 922.0 beschrieben ist.

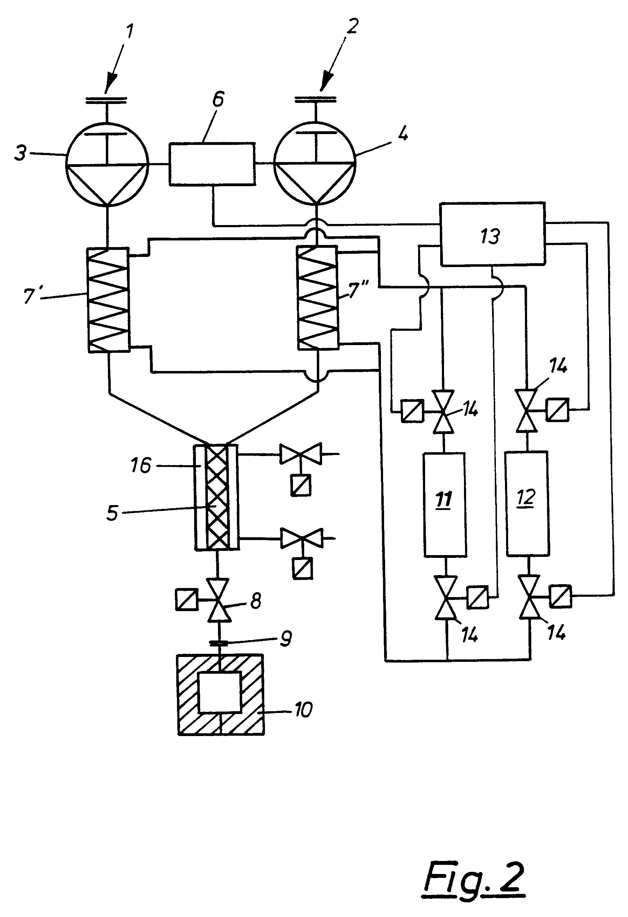

Bei der Ausführungsform gemäß Figur 2 sind die der Vorrichtung gemäß Figur 1 entsprechenden Bauteile mit identischen Bezugszeichen versehen, so daß insoweit auf eine Beschreibung im einzelnen verzichtet werden kann. Der Unterschied dieser Druckgeliervorrichtung gegenüber derjenigen gemäß Figur 1 besteht darin, daß in die Zuführungsleitungen für die beiden Einzelkomponenten zur der Mischeinrichtung 5 jeweils ein separater Wärmetauscher 7' bzw. 7'' zwischengeschaltet ist. Die Funktionsweise bzw. die zeitliche Abfolge der Wechseltemperierung der Wärmetauscher 7', 7'' entspricht i. w. der zu Figur 1 beschriebenen Vorgehensweise. Gegenüber der Druckgeliervorrichtung gemäß Figur 1 ergibt sich durch die Anordnung der Wärmetauscher 7', 7'' in den Komponenten-Zuführungsleitungen eine wesentliche Reduzierung der Fließwiderstände. Da weiterhin das dem Durchlaufmischer zufließende Produkt durch die Temperaturerhöhung bereits auf niedrigere Viskosität abgesenkt wurde, ist die Summe der Fließwiderstände im Vergleich zu der Vorrichtung gemäß Figur 1 erheblich reduziert, was wiederum den Einsatz eines baulich kleineren Durchlaufmischers ermöglicht. Ein weiterer Vorteil dieser Ausführungsform ist, daß das reaktive Massevolumen auf den Durchlaufmischer 5 und auf die kurze Zuführungsleitung zur Gießform 10 beschränkt ist.

Auch bei dieser Ausführungsform kann die Temperiereinrichtung 12 mit dem niedrigeren Temperaturniveau entfallen, nämlich dann, wenn während der Gelierzeiten keine Probleme etwa durch Sedimentation auftreten. In diesem Fall könnten auch die Wärmetauscher 7', 7'' ständig an die Temperiereinrichtung 11 angeschlossen bleiben, wenn bei den Einzelkomponenten keine Reaktion stattfindet.

Die Wärmetauschereinrichtung 16 der Mischeinrichtung 5 kann an die Temperiereinrichtung 11 oder 12 oder bspw. auch nur an eine der beiden Temperiereinrichtungen, ggf. während eines bestimmten Zeitintervalls bei der Formfüllung, angeschlossen sein. Selbstverständlich ist es aber auch möglich, eine separate Temperiereinrichtung für den Wärmetauscher 16 der Mischeinrichtung 5 vorzusehen.

In Figur 3 ist eine mögliche Ausführungsform eines Wärmetauschers 7, 7' bzw. 7'' dargestellt. Bei diesem in einem Prinzipbild dargestellten Rohrschlangen-Wärmetauscher fließt die Gießmasse bzw. fließen die Einzelkomponenten durch die Rohrschlange 15, während das Wärmeträgermedium die Rohrschlange 15 von außen umspült. Durch die Kreisbewegung der Gießmasse bzw. der Einzelkomponenten in der Rohrschlange 15 ergibt sich eine Homogenisierung der Temperatur, was für die Produktqualität ein entscheidender Faktor darstellt. Selbstverständlich ist es auch möglich, den Wärmetauscher durch zusätzliche Anschlüsse für die Zu- und Abführung des Wärmeträgermediums in Zonen unterschiedlicher Temperatur längs des Fließweges der Gießmasse zu unterteilen, um die einzelnen im gewünschten Zeitpunkt aufheizen und abkühlen zu können. Eine solche Ausgesaltung empfiehlt sich insbesondere bei größeren Wärmetauschern aufgrund des dabei vorhandenen größeren Massevolumens. Bspw. erfolgt eine gestufte Abschaltung der Heizzonen gegen Ende einer Füllphase, um schließlich an der Gießmündung Gießmasse mit niedrigerem Temperaturniveau zu erhalten.

### Bezugszeichenliste

- 1: - Anschlüsse
- 2: - Anschlüsse
- 3: - Förder- und Dosiereinrichtung
- 4: - Förder- und Dosiereinrichtung
- 5: - Mischeinrichtung
- 6: - Synchroneinrichtung
- 7: - Wärmetauscher
- 7': - Wärmetauscher
- 7'': - Wärmetauscher
- 8: - Gießventil
- 9: - Gießmündung
- 10: - Gießform
- 11: - Temperiereinrichtung
- 12: - Temperiereinrichtung
- 13: - Steuereinrichtung
- 14: - Ventil
- 15: - Rohrschlange
- 16: - Wärmetauscher

## Patentansprüche

1. Verfahren zum Befüllen wenigstens einer Gießform mit einer gießfähig flüssigen Masse, insbesondere Gießharz, dadurch gekennzeichnet, daß die Reaktivität der Gießmasse zumindest während der Füllphase für die wenigstens eine Gießform durch Energiezufuhr zunächst erhöht und dann durch Energieentzug auf einen Wert abgesenkt wird, bei welchem eine relativ lange Gebrauchsdauer der Gießmasse vorliegt.

2. Verfahren nach Anspruch 1, dadurch gekennzeichnet, daß die Energieabsenkung zum Ende der Füllphase hin erfolgt.

3. Verfahren nach Anspruch 1 oder 2, dadurch gekennzeichnet, daß die Reaktivität während der Füllphase der wenigstens einen Form einem mehrmaligen Wechsel unterworfen wird.

4. Verfahren nach einem der Ansprüche 1 bis 3, dadurch gekennzeichnet, daß die Änderung der Reaktivität der Gießmasse durch Wärmezufuhr und Wärmeentzug erfolgt.

5. Verfahren nach einem der vorhergehenden Ansprüche, dadurch gekennzeichnet, daß bei einem seriellen Verguß von mehreren Gießformen der Energieentzug bzw. die Temperaturabsenkung während der Gießpausen zwischen aufeinanderfolgenden Serien mit Gießformen erfolgt.

6. Verfahren nach einem der vorhergehenden Ansprüche, dadurch gekennzeichnet, daß es zum Druckgelieren oder zum offenen Verguß der wenigstens einen Gießform ausgebildet ist.

7. Verfahren nach einem der vorhergehenden Ansprüche, dadurch gekennzeichnet, daß es zum Befüllen der wenigstens einen Gießform unter Vakuum ausgebildet ist.

8. Verfahren zum Befüllen wenigstens einer Gießform mit einer gießfähig flüssigen Masse, welche aus wenigstens zwei Einzelkomponenten während der Füllphasegemischt wird, nach einem der Ansprüche 1 bis 7, dadurch gekennzeichnet, daß die Einzelkomponenten während der Füllphase zum Befüllen der wenigstens einen Gießform aufgeheizt werden.

9. Verfahren nach Anspruch 8, dadurch gekennzeichnet, daß die Komponenten während oder nach der Füllphase wenigstens einem Temperaturwechsel unterworfen werden.

10. Verfahren nach Anspruch 8 oder 9, dadurch gekennzeichnet, daß die reaktive Gießmasse zum Ende der Füllphase hin stromauf der wenigstens einen Gießform einer Abkühlung unterworfen wird.

11. Druckgeliervorrichtung, zum Befüllen wenigstens einer Gießform (10) mit gießfähig flüssigen Medien, zur Durchführung des Verfahrens nach einem der Ansprüche 1 bis 10, dadurch gekennzeichnet, daß wenigstens ein Wärmetauscher (7; 7', 7''; 16) für eine Änderung der Reaktivität der Gießmasse oder der Temperatur der Einzelkomponenten der Gießmasse während der Füllphase der wenigstens einen Form vorgesehen ist.

12. Vorrichtung nach Anspruch 11, dadurch gekennzeichnet, daß der wenigstens eine Wärmetauscher (7; 7', 7''; 16) für eine direkte oder indirekte Wärmeübertragung durch eine Wärmetauscherfläche ausgebildet ist.

13. Vorrichtung nach Anspruch 11 oder 12, dadurch gekennzeichnet, daß der wenigstens eine Wärmetauscher (7; 7', 7''; 16) für eine Beaufschlagung mittels eines flüssigen, dampf- und/oder gasförmigen Wärmeträgermedium ausgebildet ist.

14. Vorrichtung nach einem der Ansprüche 11 bis 13, dadurch gekennzeichnet, daß der Wärmetauscher (7; 7', 7''; 16) am Ausgang der Mischeinrichtung (5) angeordnet und/oder mit der Mischeinrichtung (5) integriert ist.

15. Vorrichtung nach einem der Ansprüche 11 bis 14, dadurch gekennzeichnet, daß zwischen den Fördereinrichtungen (3, 4) für die Einzelkomponenten der Gießmasse und der Mischeinrichtung (5) jeweils ein Wärmetauscher (7', 7'') angeordnet ist.

16. Vorrichtung nach einem oder mehreren der vorhergehenden Ansprüche, dadurch gekennzeichnet, daß der wenigstens eine Wärmetauscher (7', 7'') als Rohrschlangen-Wärmetauscher ausgebildet ist; wobei die Gießmasse oder die Einzelkomponenten durch die Rohrschlange (15) und das Wärmeträgermedium von außen um die Rohrschlange (15) geführt ist/sind.

17. Vorrichtung nach einem der Ansprüche 11 bis 16, dadurch gekennzeichnet, daß die Wärmetauscherflächen längs des Fließweges der Gießmasse oder der Einzelkomponenten in einzelne Zonen aufgeteilt ist, welche separat mit Wärmeträgermedien bzw. Kühlmittel beaufschlagbar sind.

## Claims

1. Method for the filling of at least one casting mould with a pourable liquid mass, in particular casting resin, characterised thereby, that the reactivity of the casting mass is initially increased by supply of energy at least during the filling phase for the at least one casting mould and then lowered by energy extraction to a value for which a relatively long period of use of the casting mass is available.

2. Method according to claim 1, characterised thereby, that the lowering of the energy takes place towards the end of the filling phase.

3. Method according to claim 1 or 2, characterised thereby, that the reactivity is subjected to a repeated change during the filling phase of the at least one mould.

4. Method according to one of the claims 1 to 3, characterised thereby, that the change in the reactivity of the casting mass takes place by heat supply and heat extraction.

5. Method according to one of the preceding claims, characterised thereby, that in the case of a serial casting with several casting moulds, the energy extraction or the lowering in temperature takes place during the casting intervals between successive series with casting moulds.

6. Method according to one of the preceding claims, characterised thereby, that it is developed for the pressure jellying or for the open casting with the at least one casting mould.

7. Method according to one of the preceding claims, characterised thereby, that it is developed for the filling of the at least one casting mould under vacuum.

8. Method for the filling of at least one casting mould with a pourable liquid mass, which is mixed from at least two individual components during the filling phase, according to one of the claims 1 to 7, characterised thereby, that the individual components are heated during the filling phase for the filling of the at least one casting mould.

9. Method according to claim 8, characterised thereby, that the components are subjected to at least one temperature change during or after the filling phase.

10. Method according to claim 8 or 9, characterised thereby, that the reactive casting mass is subjected to a cooling-down upstream of the at least one casting mould towards the end of the filling phase.

11. Pressure-jellying device for the filling of at least one casting mould (10) with pourable liquid media, for the performance of the method according to one of the claims 1 to 10, characterised thereby, that at least one heat exchanger (7; 7', 7''; 16) is provided for a change in the reactivity of the casting mass or the temperature of the individual components of the casting mass during the filling phase of the at least one mould.

12. Device according to claim 11, characterised thereby, that the at least one heat exchanger (7; 7', 7''; 16) is constructed for a direct or indirect heat transmission through a heat exchanger surface.

13. Device according to claim 11 pr 12, characterised thereby, that the at least one heat exchanger (7; 7', 7''; 16) is constructed for an action by means of a liquid, vaporous and/or gaseous heat carrier medium.

14. Device according to one of the claims 11 to 13, characterised thereby, that the heat exchanger (7; 7', 7''; 16) is arranged at the exit of the mixing equipment (5) and/or integrated with the mixing equipment (5).

15. Device according to one of the claims 11 to 14, characterised thereby, that a respective heat exchanger (7' 7'') is arranged between each of the conveying equipments (3, 4) for the individual components of the casting mass and the mixing equipment (5).

16. Device according to one or more of the preceding claims, characterised thereby, that the at least one heat exchanger (7', 7'') is constructed as pipe coil heat exchanger, wherein the casting mass or the individual components is or are conducted through the pipe coil (15) and the heat carrier medium is conducted around the pipe coil (15) from outside.

17. Device according to one of the claims 11 to 16, characterised thereby, that the heat exchanger surfaces are divided along the flow path of the casting mass or the individual components into individual zones which can be separately acted on by heat carrier media or coolants.

## Revendications

1. Procédé de remplissage d'au moins un moule de coulée avec une masse liquide coulable, en particulier une résine de coulée, caractérisé en ce que la réactivité de la masse à couler est d'abord relevée, au moins pendant la phase de remplissage dudit au moins un moule, par un apport d'énergie, pour être ensuite abaissée, par retrait d'énergie, à une valeur à laquelle on obtient une durée de vie relativement longue de la masse a couler.

2. Procédé selon la revendication 1, caractérisé en ce que la diminution d'énergie est effectuée vers la fin de la phase de remplissage.

3. Procédé selon la revendication 1 ou 2, caractérisé en ce que la réactivité est soumise à des modifications répétées pendant la phase de remplissage dudit au moins un moule.

4. Procédé selon l'une des revendications 1 à 3, caractérisé en ce que la modification de la réactivité de la masse à couler s'effectue par apport de chaleur et par enlèvement de chaleur.

5. Procédé selon l'une des revendications précédentes, caractérisé en ce que, lors d'une coulée en série dans plusieurs moules de coulée, l'enlèvement d'énergie, voire l'abaissement de la température, s'effectuent pendant les pauses de coulée entre des séries successives de moules de coulée.

6. Procédé selon l'une des revendications précédentes, caractérisé en ce qu'il est aménagé pour la gélification sous pression ou pour le remplissage ouvert dudit au moins un moule de coulée.

7. Procédé selon l'une des revendications précédentes, caractérisé en ce qu'il est aménagé pour le remplissage dudit au moins un moule de coulée sous vide.

8. Procédé de remplissage d'au moins un moule de coulée avec une masse liquide coulable, composée d'au moins deux composants individuels mélangés pendant la phase de remplissage, selon l'une des revendications 1 à 7, caractérisé en ce que les composants individuels sont chauffés pendant la phase de remplissage en vue du remplissage dudit au moins un moule de coulée.

9. Procédé selon la revendication 8, caractérisé en ce que les composants sont soumis à au moins un changement de température pendant ou après la phase de remplissage.

10. Procédé selon la revendication 8 ou 9, caractérisé en ce que, vers la fin de la phase de remplissage, la masse à couler active est soumise à un refroidissement en amont dudit au moins un moule de coulée.

11. Dispositif de gélification sous pression pour le remplissage d'au moins un moule de coulée (10) de fluides liquides coulables en vue de mettre en oeuvre le procédé selon l'une des revendications 1 à 10, caractérisé en ce qu'au moins un échangeur thermique (7; 7', 7''; 16) est prévu en vue de provoquer une modification de la réactivité de la masse à couler ou de la température des composants individuels de la masse à couler pendant la phase de remplissage dudit au moins un moule de coulée.

12. Dispositif selon la revendication 11, caractérisé en ce que ledit au moins un échangeur thermique (7; 7', 7''; 16) est conçu pour réaliser un transfert de chaleur direct ou indirect via une surface d'échange thermique.

13. Dispositif selon la revendication 11 ou 12, caractérisé en ce que ledit au moins un échangeur thermique (7; 7', 7''; 16) est conçu pour une exposition à un fluide caloriporteur liquide, en phase vapeur, et/ou gazeux.

14. Dispositif selon l'une des revendications 11 à 13, caractérisé en ce que l'échangeur thermique (7; 7', 7''; 16) est aménagé à la sortie du dispositif mélangeur (5) et/ou est intégré dans le dispositif mélangeur (5).

15. Dispositif selon l'une des revendications 11 à 14, caractérisé en ce que respectivement un échangeur thermique (7', 7'') est disposé entre les dispositifs transporteurs (3, 4) des composants individuels de la masse à couler et le dispositif mélangeur (5).

16. Dispositif selon l'une ou plusieurs des revendications précédentes, caractérisé en ce que ledit au moins un échangeur thermique (7', 7'') est réalisé sous forme d'un échangeur thermique à serpentin tubulaire, la masse à couler ou les composants individuels de celle-ci étant conduits à travers le serpentin tubulaire (15), et le fluide caloriporteur étant conduit extérieurement autour du serpentin tubulaire (15).

17. Dispositif selon l'une des revendications 11 à 16, caractérisé en ce que les surfaces d'échange thermique sont divisées en différentes zones le long du chemin d'écoulement de la masse à couler ou de ses composants individuels, ces zones pouvant être exposées séparément à des fluides caloriporteurs ou des fluides de refroidissement.
